# FASCICULE DE BREVET EUROPEEN

(11) **EP 3 016 845 B1**
(45) Date de publication et mention de la délivrance du brevet: **03.04.2024**
(21) Numéro de dépôt: 14737206.4
(22) Date de dépôt: 04.07.2014
(51) Int. Cl.: B62M 6/75

(54) **DISPOSITIF D'ASSISTANCE ÉLECTRIQUE POUR VÉLO ET VÉLO ÉQUIPÉ DUDIT DISPOSITIF**
ELEKTRISCHE HILFSANTRIEBSVORRICHTUNG FÜR FAHRRÄDER UND FAHRRAD MIT DIESER VORRICHTUNG
ELECTRIC POWER-ASSIST DEVICE FOR BICYCLES AND BICYCLE EQUIPPED WITH SAID DEVICE

(30) Priorité: 04.07.2013 FR 1356527
(43) Date de publication de la demande: 11.05.2016
(73) Titulaire: Compagnie Générale des Etablissements Michelin, 63000 Clermont-Ferrand (FR)
(72) Inventeur: OLSOMMER, David, F-63040 Clermont-Ferrand Cedex 9 (FR)
(74) Mandataire: M.F.P. Michelin
(86) Numéro de dépôt international: PCT/EP2014/064376
(87) Numéro de publication internationale: WO 2015/001110

(56) Documents cités:
- CN-Y- 2 563 077
- DE-A1-102012 005 756
- DE-U1-202010 012 992
- JP-A- 2003 341 307
- JP-U- S61 200 707
- US-A- 5 816 355
- US-A1- 2011 114 407

## Description

La présente invention concerne les dispositifs d'assistance électrique pour vélo et les vélos équipés de tels dispositifs.

Dans ce domaine, on connaît un certain nombre de dispositifs disponibles sur le marché.

Certains de ces dispositifs utilisent une machine électrique placée dans le moyeu de l'une des roues du vélo. Cette machine électrique entraine la roue directement ou par l'intermédiaire d'un système de réduction. Ce type de dispositifs présente l'inconvénient d'une masse importante, cette masse étant en outre située au niveau de la roue ce qui la rend très sensible pour le cycliste. De plus, lorsque l'on doit démonter la roue, par exemple pour changer le pneumatique ou réparer une crevaison,
le démontage de la roue est rendu complexe par la présence de connexions électriques qui sont nécessaires à l'alimentation de la machine électrique et de fixations spécifiques du moyeu qui sont nécessaires à la reprise du couple moteur.

D'autres dispositifs utilisent un groupe motoréducteur entrainant le pédalier du vélo et donc utilisant la transmission existante du vélo. Ce type de dispositifs présente l'inconvénient d'impacter profondément l'architecture du vélo de sorte qu'il nécessite en particulier que les cadres des vélos soient conçus spécifiquement pour accueillir ces dispositifs.

Le document DE-20314210-U1 décrit un principe d'entrainement d'un vélo par un moteur électrique dans lequel un pignon moteur engrène sur une denture solidaire du cercle de la jante avant du vélo, ladite denture étant une denture interne, c'est à dire dont les dents pointent vers l'axe de roue. Un inconvénient de ce système est que la denture de la jante est susceptible de retenir des cailloux.

On connaît par ailleurs le document DE 10 2012 005 756 qui décrit un vélo selon le préambule de la revendication 1 et notamment où le dispositif d'assistance électrique du vélo comporte des moyens de fixation portés par le bâti. Toutefois, l'entraînement de la roue de vélo se fait par friction au niveau de la bande de roulement.

L'invention a donc pour objet de proposer un dispositif d'assistance électrique pour vélo ainsi qu'un vélo équipé dudit dispositif qui résolvent tout ou partie de ces difficultés.

L'invention propose pour cela un vélo selon la revendication 1, le vélo comportant :un cadre de vélo et une roue arrière comportant un bandage et un dispositif d'assistance électrique pour vélo, ledit dispositif comprenant :
- une machine électrique comprenant un rotor,
- des moyens de fixation de la machine électrique,
- une batterie pour alimenter la machine électrique,
- des moyens de contrôle de la machine électrique,
- un pignon moteur entrainé par le rotor de la machine électrique, et
- un bâti,
- les moyens de fixation sont portés par le bâti du dispositif, lui-même fixé au cadre du vélo, qui permet le montage du dispositif sur le vélo, le bâti comportant des bras fixés sur l'axe de la roue arrière du vélo et des tirants qui immobilisent la rotation du bâti autour de l'axe de la roue,
ledit vélo étant caractérisé en ce que le pignon moteur comporte une denture qui engrène tangentiellement avec une denture complémentaire principalement constituée de caoutchouc solidaire du bandage de la roue arrière du vélo, et la denture complémentaire est solidaire d'un flanc du bandage et se situe radialement sous l'équateur.

De préférence, les moyens de contrôle de la machine électrique sont également portés par le bâti.

De préférence encore, la batterie est également portée par le bâti.

De préférence, les moyens de fixation forment avec la machine électrique un sous-ensemble manuellement séparable du bâti.

De préférence encore, le sous-ensemble manuellement séparable comprend en outre les moyens de contrôle de la machine électrique.

De préférence encore, le sous-ensemble manuellement séparable comprend en outre la batterie.

De préférence encore, la batterie est en outre manuellement séparable du bâti indépendamment du sous-ensemble.

De préférence, le sous-ensemble est porté par un encadrement s'étendant dans un plan sensiblement horizontal, ledit sous-ensemble étant séparable horizontalement du bâti, de préférence, de préférence transversalement.

De préférence, le bâti comprend un connecteur électrique rapide pour connecter le sous-ensemble à des interfaces solidaires du vélo.

De préférence, le bâti constitue en outre un porte-bagages.

De préférence, les moyens de fixation comprennent un bras oscillant articulé par rapport à une embase portée par le bâti selon un axe sensiblement parallèle à l'axe de la machine électrique.

De préférence, le bras oscillant comporte une articulation permettant de replier la machine électrique contre le sous-ensemble.

D'autres caractéristiques et avantages de l'invention apparaîtront grâce à la description de modes préférés de réalisation. Les figures représentent respectivement:
- Figure 1 : vue (partielle) de côté d'un vélo à assistance électrique selon un premier mode de réalisation de l'invention.
- Figure 2 : vue détaillée du sous-ensemble selon un mode de réalisation préféré de l'invention.
- Figure 3 : vue de dessous du sous-ensemble de la figure 2.
- Figure 4 : vue détaillée à plus grande échelle du dispositif d'assistance électrique et du vélo à assistance électrique de la figure 1.
- Figure 5 : vue détaillée montrant en particulier le bâti du dispositif d'assistance électrique de la figure 1.
- Figure 6 : vue similaire à celle de la figure 4 depuis l'autre côté du vélo à assistance électrique de la figure 1.
- Figure 7 : vue similaire à la figure 1 montrant un autre mode de réalisation préféré du dispositif de l'invention.
- Figure 8 : vue identique à la figure 7 dans laquelle la batterie est extraite.
- Figure 9 : vue détaillée du dispositif des figures 7 et 8.
- Figure 10 : vue encore plus détaillée du dispositif selon la figure 8.
- Figure 11 : vue de la batterie équipant le dispositif des figures 7 et 8.
- Figure 12 : vue générale du sous-ensemble selon une variante du deuxième mode de réalisation préféré de l'invention.
- Figure 13 : vue schématique en coupe montrant la coopération de la machine électrique avec le bandage d'un vélo à assistance électrique selon l'invention.
- Figure 14 : vue de détail en coupe de l'engrènement du pignon moteur avec la denture du bandage selon un mode de réalisation préféré de l'invention.
- Figure 15 : vue schématique en coupe du détail de la denture du pignon moteur de la figure 14.
- Figure 16 : vue schématique en coupe du détail d'une denture d'un mode de réalisation préféré d'un bandage selon l'invention.
- Figure 17 : vue de côté d'un pignon moteur à denture hélicoïdale selon un mode de réalisation préféré du dispositif de l'invention.
- Figure 18 : vue en coupe et en perspective d'un bandage pneumatique équipant un vélo selon l'invention.
- Figure 19 : vue (partielle) de côté d'un vélo à assistance électrique selon un troisième mode de réalisation de l'invention.
- Figure 20 et 21 : vues détaillées du sous-ensemble de la figure 19.

Les figures représentent différentes vues d'ensemble et de détails de modes de réalisation préférés d'un dispositif d'assistance électrique et d'un vélo à assistance électrique selon l'invention. Sur les différentes figures, les éléments identiques ou similaires portent des références identiques. Les références ne sont pas systématiquement reprises sur chaque figure afin de simplifier la compréhension des dessins.

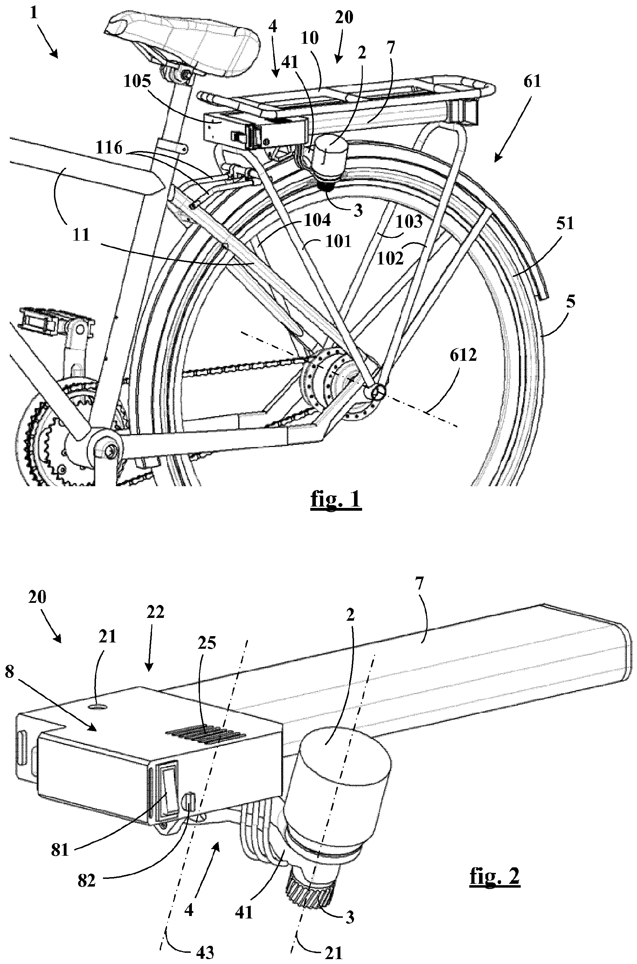

À la figure 1, on voit les éléments principaux d'un vélo à assistance électrique selon l'invention. Une machine électrique 2 est fixée à proximité d'un bandage 5, ici à proximité du bandage de la roue arrière 61. Un pignon moteur 3 engrène tangentiellement avec une denture 51 solidaire du bandage 5 et peut ainsi lui transmettre une force motrice qui assiste le cycliste. La machine électrique est de préférence un moteur synchrone triphasé sans balai à aimants permanents. De préférence encore le rotor est un rotor externe comme représenté sur les figures. Une batterie 7, alimente la machine électrique.

Les moyens de fixation 4 de la machine électrique sont portés par un bâti 10, lui-même fixé au cadre 11 du vélo. Des bras 101, 102, 103, 104 du bâti sont fixés sur l'axe de la roue 612. Des tirants 116 immobilisent la rotation du bâti autour de l'axe de la roue. La fixation du bâti sur l'axe de la roue permet un montage simple tout en garantissant une grande précision et reproductibilité du positionnement du pignon moteur 3 par rapport à la denture 51 du bandage.

De préférence, la batterie est également portée par le bâti comme représenté ici. Alternativement, la batterie peut être fixée à sur une autre partie du vélo de manière connue en soi.

De préférence les moyens de contrôle 8 de la machine électrique, c'est à dire l'électronique de contrôle et l'électronique de puissance, sont également portés par le bâti. De préférence, un sous-ensemble séparable 20 est constitué des moyens de fixations, de la machine électrique et des moyens de contrôle. De préférence encore, ce sous-ensemble est manuellement séparable du bâti, c'est à dire sans l'aide d'aucun outil.

Dans les modes de réalisation où la batterie 7 est portée par le bâti, le sous-ensemble séparable peut également comprendre ladite batterie comme représenté à la figure 2. On comprend que le fait de retirer un tel sous-ensemble 20 du bâti permet d'utiliser le vélo sans assistance électrique mais aussi sans le surpoids associé à une assistance électrique.

Dans le mode de réalisation représenté ici, les moyens de contrôle 8 comprennent un commutateur 81 permettant au cycliste de mettre en marche ou d'éteindre le dispositif d'assistance et un bouton rotatif 82 de réglage du niveau d'assistance. Ces commandes peuvent également être placées sur le guidon du vélo ou contrôlées à distance par l'intermédiaire d'une télécommande ou d'une application installée dans un téléphone mobile du cycliste. Une prise d'alimentation électrique 21 pour la recharge de la batterie est accessible y compris lorsque le sous-ensemble est monté dans le bâti.

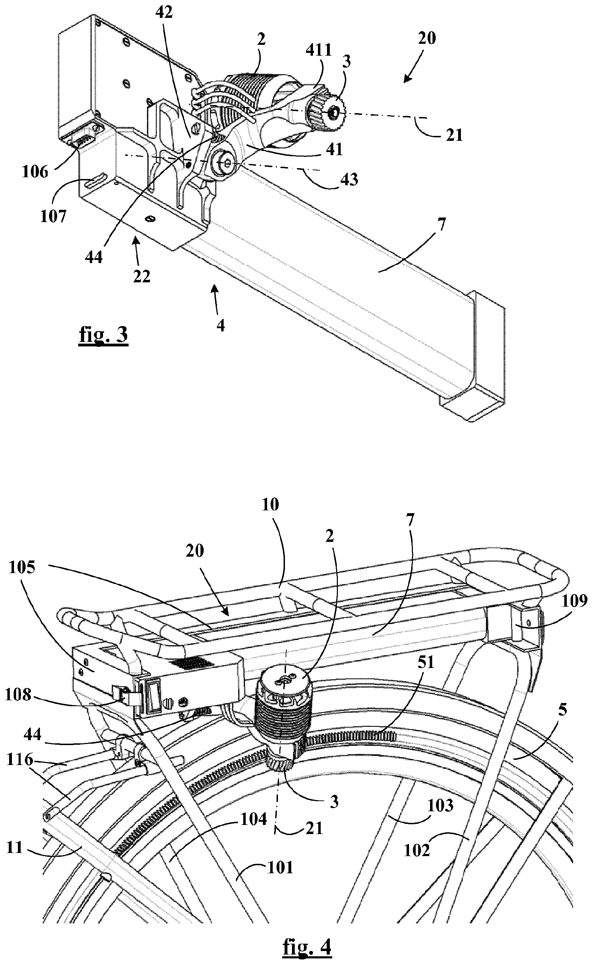

La figure 3 montre ce sous-ensemble 20 en vue de dessous. On peut y voir que les moyens de fixation 4 de la machine électrique comprennent de préférence un bras oscillant 41 et une embase 42, l'embase étant destinée à être solidaire du bâti et le bras oscillant 41 étant articulé par rapport à l'embase selon un axe d'oscillation 43 sensiblement parallèle à l'axe 21 de la machine électrique. Un ressort 44 vient contraindre le bras de manière à ce que le pignon soit appliqué avec une certaine force d'appui minimale contre le bandage. On voit également sur la figure 3 un connecteur électrique rapide 106 et une encoche 107 pour les moyens de verrouillage à clé.

Convenons d'appeler « bloc moteur » l'ensemble mécanique correspondant au sous-ensemble séparable 20 sans sa batterie. Le bloc moteur 22 comprend donc en particulier l'embase 42, le bras oscillant 41, la machine électrique 2 et de préférence aussi les circuits électroniques de puissance et de contrôle. On comprend que c'est ce bloc moteur qui doit être fermement solidaire du bâti lorsque le dispositif d'assistance électrique est utilisé. Des ailettes 25 peuvent être prévues sur une ou plusieurs des faces du bloc moteur 22 (voir figure 2) afin d'améliorer le refroidissement de l'électronique de puissance située à l'intérieur du bloc moteur 22 en contact avec la ou les faces munies d'ailettes 25. Ce principe de refroidissement est particulièrement efficace dans le cas où le bloc moteur ou les ailettes sont réalisées dans un matériau bon conducteur thermique comme par exemple l'aluminium.

A la figure 4, on voit mieux le bâti 10 portant le sous-ensemble séparable 20. On voit que le bâti comporte un encadrement 105 s'étendant dans un plan sensiblement horizontal. Le sous-ensemble 20 peut être glissé horizontalement dans l'encadrement et y être fixé par une attache rapide 108 à l'avant de celui-ci. L'extrémité arrière du sous-ensemble 20 (constitué par la partie arrière de la batterie) est bloquée dans l'encadrement par une butée fixe 109.

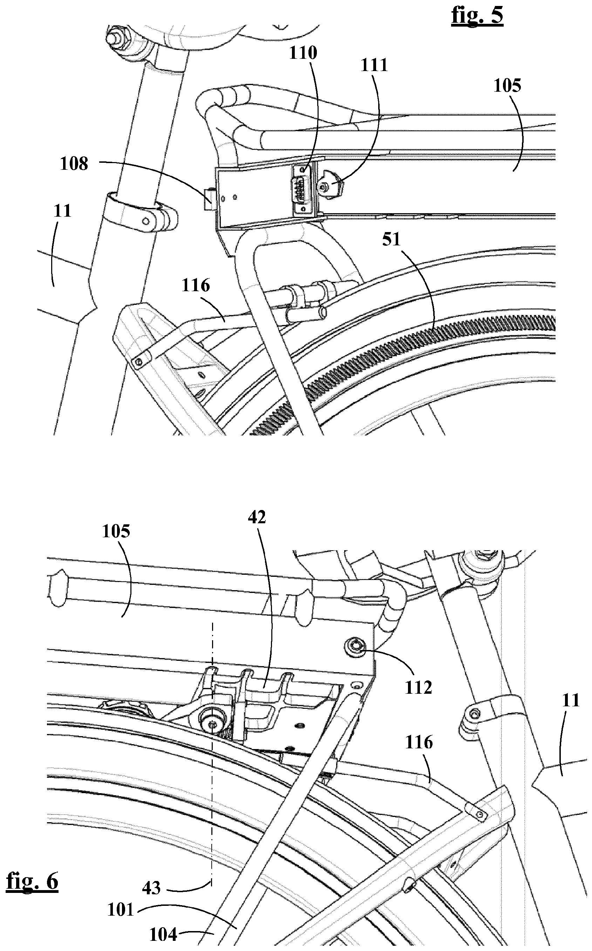

A la figure 5, le sous-ensemble 20 est extrait et on voit un connecteur électrique stationnaire 110 apte à coopérer avec le connecteur 106 du sous-ensemble. Le connecteur stationnaire 110 peut permettre de relier le dispositif d'assistance électrique à des interfaces ou des capteurs installés sur le vélo. Une interface de commande au guidon peut être prévue pour l'accès à des informations et/ou pour le contrôle du dispositif par le cycliste. Parmi les capteurs qui peuvent être utiles pour la commande dispositif d'assistance électrique, citons par exemple les capteurs de pédalage, capteur de couple de pédalage, capteur de vitesse. Le connecteur peut également servir à alimenter l'éclairage du vélo à partir de la batterie 7. On voit également des moyens de verrouillage 111 ainsi que l'attache rapide 108. On comprend en comparant principalement les figure 3, 4 et 5 que l'installation du sous-ensemble 20 selon ce mode de réalisation consiste à placer l'extrémité de la batterie en position derrière la butée fixe 109 puis à pivoter dans un plan horizontal l'avant du sous-ensemble 20 jusqu'à pouvoir enclencher l'attache rapide 108. Dans cette position, le connecteur stationnaire 110 est bien associé au connecteur 106 du sous-ensemble et les moyens de verrouillage 111 (par exemple à clé) peuvent être actionnés et coopérer avec l'encoche 107 du sous-ensemble (visible sur la figure 3) pour le sécuriser si nécessaire en position d'utilisation. Dans un autre mode de réalisation non représenté sur les figures, il est possible d'avoir un système dont le bloc moteur 22, ainsi que les connecteurs électriques 106 et 110, ainsi que le système de verrouillage 107, 111 et 112 sont situés non pas à l'avant du bâti 10 comme décrit sur les figures 1 à 12, mais à l'arrière du bâti 10. Dans un tel mode de réalisation, la butée 109 serait alors située à l'avant du bâti 10.

La figure 6 montre depuis l'autre côté du vélo, le même sous-ensemble installé dans le bâti. On voit en particulier le barillet 112 du verrouillage à clé.

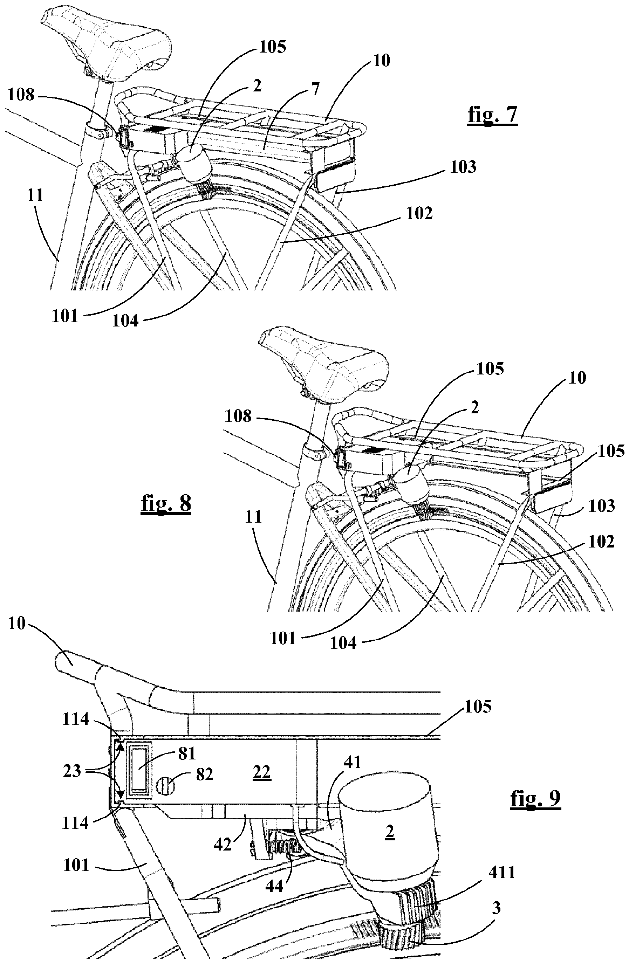

Sur les figures 7 à 12, on a représenté un deuxième mode de réalisation préféré de l'invention dans lequel la batterie 7 est séparable du sous ensemble 20 et peut être extraite du bâti indépendamment du reste du sous ensemble, c'est à dire indépendamment du bloc moteur 22.

La figure 7 montre le dispositif lorsque la batterie est en place et la figure 8 montre le dispositif lorsque la batterie seule est extraite. On comprend que la batterie est extraite horizontalement du bâti selon un mouvement longitudinal vers l'arrière.

La figure 9 fait en particulier apparaître les nervures transversales 114 de l'encadrement 105 qui coopèrent avec des rainures transversales 23 du bloc moteur. Cette disposition permet de guider le sous-ensemble lors de son installation dans l'encadrement et assure un maintien rigide et fiable de l'embase 42 et donc des moyens de fixations de la machine électrique 2. Selon ce mode de réalisation, le sous-ensemble doit donc être extrait horizontalement et selon un mouvement transversal. Lors de cette extraction, la batterie peut demeurer solidaire du bloc moteur (comme représenté à la figure 7) et donc suivre le même mouvement. La batterie peut également avoir été extraite précédemment par l'arrière du bâti comme représenté à la figure 8.

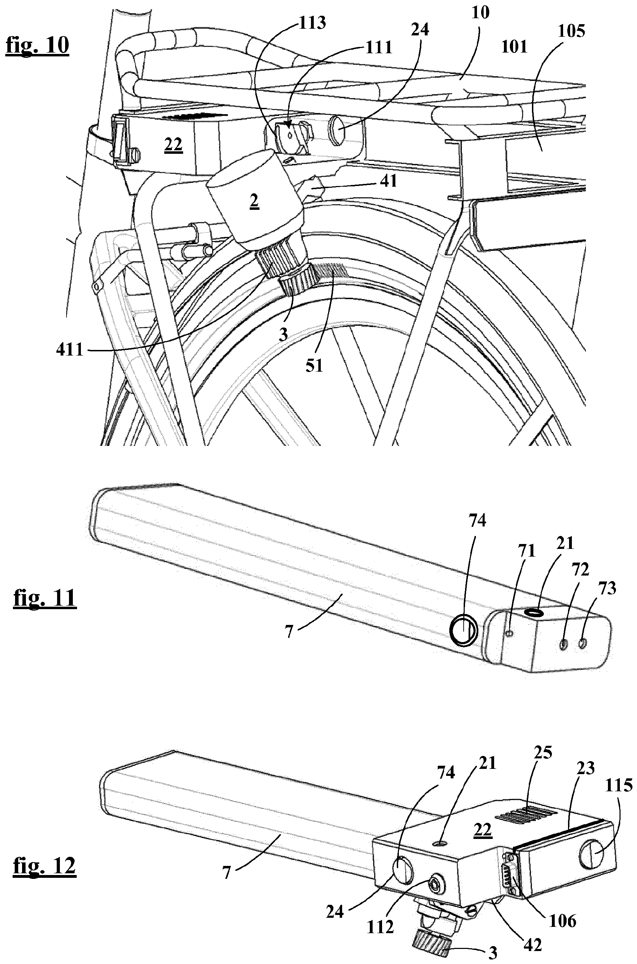

À la figure 10, on voit sous un angle différent le même sous-ensemble en place dans le bâti sans la batterie. Cette vue fait apparaître les moyens de verrouillage 111 qui sont adaptés aux différentes situations et manipulation décrites ci-dessus. Le secteur des moyens de verrouillage 111 comporte une rainure incurvée 113 destinée à coopérer avec un doigt 71 de la batterie (voir figure 11) pour sélectivement la bloquer en place ou permettre son extraction selon la position angulaire du secteur. Les moyens de verrouillage comportent une troisième position permettant de libérer et donc d'extraire le sous-ensemble complet (ou le bloc moteur dans le cas où la batterie a déjà été extraite). On comprend que la position représentée à la figure 9 est celle qui autorise l'extraction de la batterie tout en maintenant le bloc moteur verrouillé. Sur les figures 9 et 10, on voit également des ailettes de refroidissement 411 issues du bras oscillant 41. Ces ailettes favorisent le refroidissement du stator de la machine électrique par l'air ambiant puisque le stator interne de la machine électrique est solidaire du bras 41 (voir également la figure 3).

Comme visible à la figure 11, la batterie comporte un bouton élastique 74 destiné à coopérer avec une ouverture 24 du sous-ensemble (voir figure 10) pour assurer une liaison rapide et sûre (par clipsage) de la batterie 7 au bloc moteur 22, y compris en l'absence de verrouillage. La batterie comporte également deux contacts 72 et 73 pour sa connexion électrique au bloc moteur, ainsi qu'une prise pour la recharge 21.

La figure 12 montre le sous-ensemble 20 complet selon une variante de ce mode de réalisation dans laquelle le bloc moteur comprend également un bouton élastique 115 similaire au bouton élastique 74 de la batterie. Le bouton élastique 115 est destiné à coopérer avec une ouverture pratiquée sur la face avant de l'encadrement 105 afin d'assurer une liaison rapide et sûre (par clipsage) du bloc moteur 22 au bâti, y compris en l'absence de verrouillage.

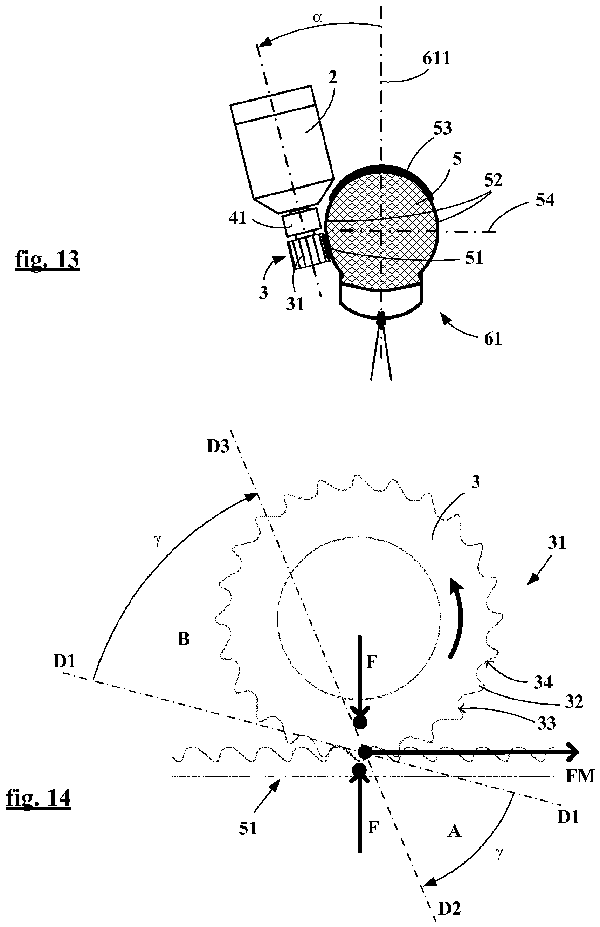

A la figure 13 on a représenté en vue selon le plan de la roue un mode de réalisation de l'invention de la coopération entre la machine électrique 2 et le bandage 5. On voit la denture 31 du pignon moteur 3 engrener tangentiellement avec la denture complémentaire 51 du bandage. La machine électrique est inclinée d'un angle α par rapport au plan 611 de la roue 61. Selon l'invention, l'angle α peut varier mais il est de préférence compris entre - 10° et + 30°. Sur cet exemple α vaut environ 25°, la denture 51 est solidaire d'un flanc 52 du bandage et se situe radialement sous l'équateur 54. Le bandage peut être un bandage pneumatique ou non-pneumatique, voire un bandage plein.

De préférence, la machine électrique entraine directement le pignon moteur, c'est à dire sans aucun moyen de réduction intermédiaire, le pignon étant porté par l'arbre de la machine électrique. Selon un mode de réalisation préféré de l'invention, un mécanisme de roue libre est cependant interposé entre l'arbre et le pignon de sorte que le bandage n'entraine pas la machine électrique lorsque le vélo se déplace en marche avant. Dans l'hypothèse où le dispositif ne comprendrait pas de roue-libre, une récupération d'énergie électrique peut être réalisée lorsque le cycliste freine.

Comme représenté sur l'ensemble des figures, la machine électrique 2 est de préférence placée radialement à l'extérieur du pignon moteur 3 par rapport à l'axe 612 de la roue du vélo, c'est à dire au-dessus du pignon moteur 3 dans cette configuration.

La figure 14 montre en détail l'engrènement du pignon moteur 3 sur le bandage. Le pignon transmet au bandage une force motrice FM. On voit ici un mode de réalisation préféré dans lequel les dents 32 du pignon sont asymétriques et configurées de sorte que l'angle d'ouverture de leurs faces motrices 33 est plus faible que l'angle d'ouverture de leurs faces non-motrices 34. La forme de la denture complémentaire 51 solidaire du bandage est naturellement adaptée en conséquence. Cette disposition permet d'améliorer sensiblement le rendement de l'engrènement ainsi que d'augmenter la valeur maximale de la force motrice FM transmissible. On a également représenté la force d'appui F du pignon sur le bandage. Cette force est transmise par les moyens de fixation de la machine électrique et a pour effet de maintenir l'engrènement même en cas de déformations des différents éléments du dispositif. Si on appelle F0 la force d'appui du pignon en l'absence de force motrice et que l'on appelle FD la force dynamique supplémentaire engendrée par l'effet de la force motrice, on peut dire que F = F0 + FD.

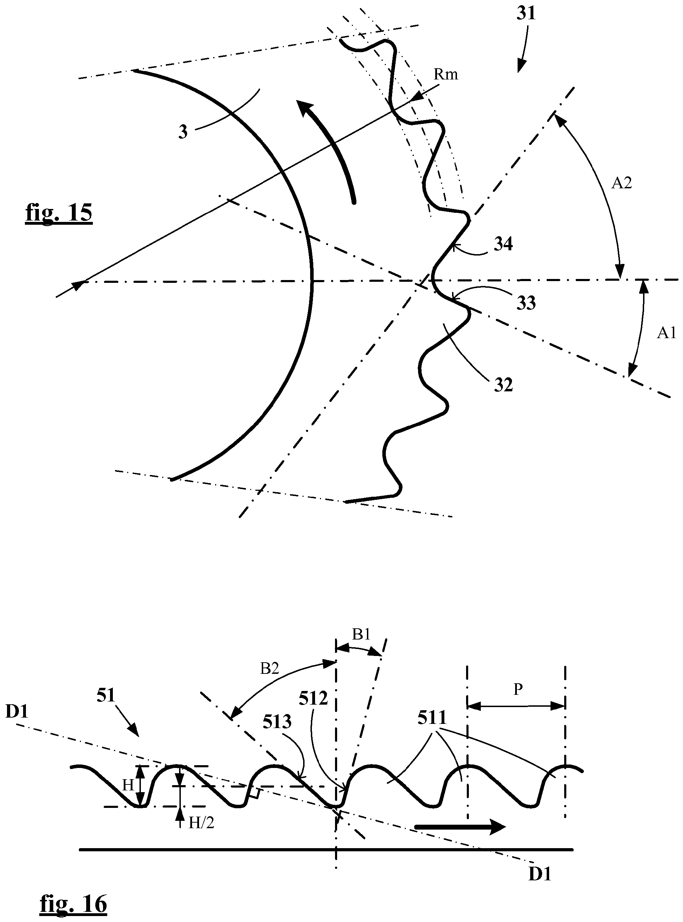

La droite D1 est la droite perpendiculaire à la tangente des dentures au point de contact à mi-hauteur des dents (voir également figure 16). Les demi-droites D2 et D3 sont écartées de D1 d'un angle γ. Le secteur A correspond à la surface comprise entre la droite D1 et la demi-droite D2. Le secteur B correspond à la surface comprise entre la droite D1 et la demi-droite D3. De préférence, l'angle y n'excède pas 60°. Une manière de s'assurer que la force motrice génère une force d'appui dynamique supplémentaire est de vérifier que la position de l'intersection de l'axe 43 avec le plan médian du pignon respecte l'une des conditions suivantes :

Si l'axe 43 est situé à l'avant du pignon par rapport au sens d'avancement du vélo (cas représenté sur les figures 1 à 12), l'intersection doit être située dans le secteur A représenté à la figure 14.

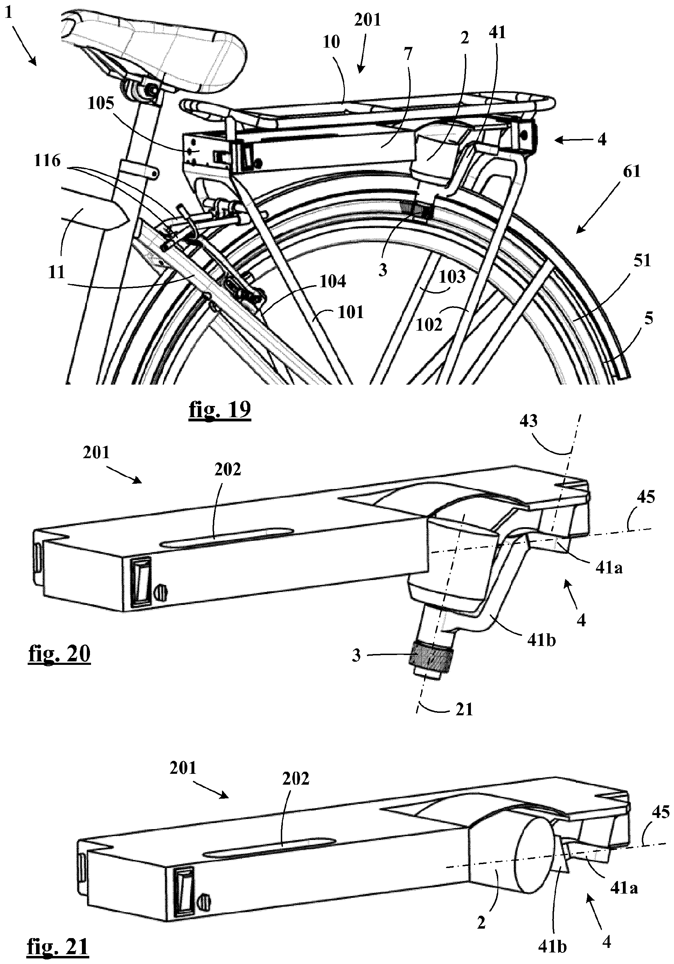

Si l'axe 43 est situé à l'arrière du pignon par rapport au sens d'avancement du vélo (cas des figures 19 à 21), l'intersection doit être située dans le secteur B représenté à la figure 14.

A la figure 15, on a représenté à une plus grande échelle la denture 31 du pignon 3 afin de mieux visualiser le mode de réalisation asymétrique préféré décrit à la figure 12. On voit que l'angle d'ouverture A1 des faces motrices 33 est sensiblement plus faible que l'angle d'ouverture A2 des faces non-motrices 34.

A la figure 16, on a représenté à une plus grande échelle la denture 51 du bandage afin de mieux visualiser un mode de réalisation préféré. Selon la même logique que pour le pignon moteur, les dents 511 de la denture du bandage ont des faces motrices 512 et des faces non-motrices 513. On voit que l'angle d'ouverture B1 des faces motrices 512 est sensiblement plus faible que l'angle d'ouverture B2 des faces non-motrices 513. La denture a un pas P et une hauteur H. Le pas de la denture est de préférence compris entre 1,8 mm et 5,5 mm. On a également représenté sur cette figure la droite D1 évoquée plus haut en référence à la figure 14.

Les figures 15 et 16 illustrent des dentures comportant des faces rectilignes. Dans le cas de faces courbes, les angles décrits ci-dessus doivent être mesurés en considérant la tangente au point du profil correspondant à la demi-hauteur de dent (voir le rayon moyen Rm sur la figure 15 et la demi-hauteur H/2 sur la figure 16).

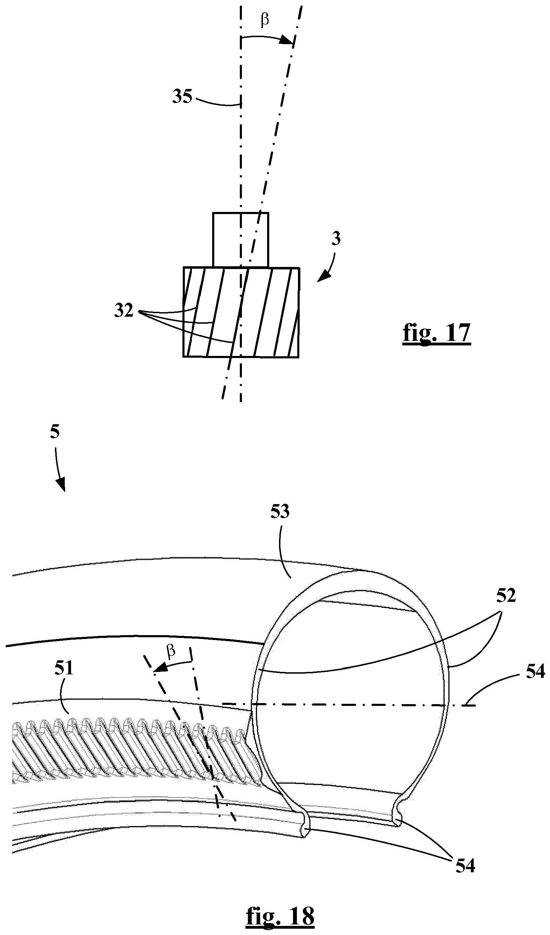

À la figure 17 on a représenté un mode de réalisation préféré du pignon moteur 3 dans lequel la denture est une denture hélicoïdale similaire à celles visibles sur les figures 1 à 12. L'axe des dents 32 est incliné d'un angle β par rapport à l'axe 35 du pignon et donc par rapport à l'arbre de la machine électrique 21. L'angle β représenté ici est d'environ 15°, mais il peut par exemple être compris entre 4 et 40°, et de préférence entre 10 et 30°. L'inclinaison de la denture du bandage doit naturellement être adaptée en conséquence. Cette disposition permet de réduire sensiblement le bruit émis par l'engrènement. De préférence, le pignon moteur 3 est réalisé en métal, par exemple en acier. Le cas échéant, la roue-libre évoquée plus haut peut être intégrée à l'intérieur du pignon.

À la figure 18, on voit un mode de réalisation préféré du bandage 5. Il s'agit ici d'un bandage pneumatique comprenant de manière connue en soi des flancs 52, une bande de roulement 53 et des tringles 54 pour son ancrage sur une jante de vélo non représentée. On voit également que les dents de la denture 51 solidaire du flanc sont inclinées par rapport à la direction radiale du bandage d'un angle correspondant à l'angle d'hélice β décrit pour le pignon moteur en référence à la figure 17.

Selon l'invention, la denture du bandage est principalement constituée de caoutchouc d'une dureté Shore A comprise de préférence entre 55 et 85. La denture est de préférence moulée en même temps que le bandage pneumatique mais elle peut aussi être rapportée sur un pneumatique conventionnel moulé précédemment.

Un renfort textile peut être associé à la surface de la denture afin de limiter l'usure par abrasion et le bruit de denture. Il est avantageux d'utiliser des tissus de renfort textile de type polyamide, tissés de manière à être extensibles lors du moulage de la denture.

De manière préférée et comme déjà représenté sur la figure 13, la denture 51 est placée radialement sous l'équateur 54 du pneumatique 5. Alternativement, la denture peut être placée à l'épaule du pneumatique, c'est à dire à proximité de la bande de roulement 53, voire au centre de la bande de roulement 53, en position horizontale.

à la figure 19, on a représenté un troisième mode de réalisation du dispositif d'assistance électrique selon l'invention dans lequel l'axe 43 d'oscillation du bras est situé à l'arrière du pignon par rapport au sens d'avancement du vélo. Sur cet exemple, l'angle α vaut environ 5° et l'angle β vaut environ 24°. Notons que ces angles sont également tout à fait applicables dans les configurations des figures précédentes.

Aux figures 20 et 21, on voit à plus grande échelle le sous-ensemble extractible 201 de la figure 19. Le bras 41 comprend ici une articulation selon un axe de repli 45. Cette articulation permet le repli de la machine électrique contre l'embase lorsque l'assistance n'est pas mise en oeuvre. Ainsi, on obtient un sous-ensemble sensiblement plat et compact facilitant son transport et son stockage. L'opération de repli de la machine électrique peut se faire par l'intermédiaire d'un actionneur de préférence électrique ou manuellement par rotation du demi-bras oscillant 41b par rapport au demi-bras oscillant 41a autour de l'axe de repli 45 qui est ici sensiblement parallèle à la direction d'avancement du vélo. La remise en position de fonctionnement se fait de manière inverse en retirant la machine électrique en rotation autour de l'axe 45 jusqu'à sa position de travail, la position de travail étant déterminée par une butée en rotation (non représentée) entre les demi-bras oscillants 41a et 41b. On voit également sur ces figures une ouverture 202 qui peut être débouchante et fait office de poignée facilitant la préhension du sous-ensemble pour sa mise en place, son extraction ainsi que son transport.

Un kit d'assistance électrique selon une réalisation qui n'est pas revendiqué, comprend donc un dispositif d'assistance électrique tel que décrit en référence aux différents modes de réalisation illustrés par les figures et un bandage comportant une denture adaptée, de préférence un bandage pneumatique tel que décrit plus haut en référence à la figure 18.

Dans un mode de réalisation de l'invention (non représenté) le sous-ensemble séparable peut également comporter une connexion de type USB permettant par exemple de configurer ou mettre à jour les moyens de contrôle à partir d'un ordinateur ou permettant la recharge d'un téléphone portable.

## Revendications

1. Vélo comportant :
un cadre (11) de vélo et
une roue arrière (61) comportant un bandage pneumatique (5) avec une denture complémentaire (51). et
un dispositif d'assistance électrique pour vélo, ledit dispositif comprenant :
- une machine électrique (2) comprenant un rotor,
- des moyens de fixation (4) de la machine électrique, électrique (2),
- une batterie (7) pour alimenter la machine électrique (2),
- des moyens de contrôle (8) de la machine électrique (2),
- un pignon moteur (3) entrainé par le rotor de la machine électrique (2), et
- un bâti (10), où
- les moyens de fixation (4) sont portés par le bâti (10) du dispositif, lui-même fixé au cadre (11) du vélo, qui permet le montage du dispositif sur le vélo, le bâti comportant des bras (101, 102, 103, 104) fixés sur l'axe de la roue arrière (61) du vélo et des tirants (116) qui immobilisent la rotation du bâti (10) autour de l'axe de la roue,
ledit vélo étant **caractérisé en ce que** le pignon moteur (3) comporte une denture (31) qui engrène tangentiellement avec une denture complémentaire (51) principalement constituée de caoutchouc solidaire du bandage (5) de la roue arrière (61) du vélo, et la machine électrique (2) est inclinée d'un angle par rapport au plan de la roue arrière (61), et la denture complémentaire (51) est solidaire d'un flanc (52) du bandage et se situe radialement sous l'équateur (54).

2. Vélo selon la revendication 1 dans lequel les moyens de contrôle (8) de la machine électrique (2) sont également portés par le bâti (10).

3. Vélo selon la revendication 2 dans lequel la batterie (7) est également portée par le bâti (10).

4. Vélo selon l'une des revendications précédentes dans lequel les moyens de fixation (4) forment avec la machine électrique (2) un sous-ensemble (20) manuellement séparable du bâti (10).

5. Vélo selon la revendication 4 dans lequel le sous-ensemble (20) manuellement séparable du bâti comprend en outre les moyens de contrôle (8) de la machine électrique. électrique (2).

6. Vélo selon la revendication 5 dans lequel le sous-ensemble (20) manuellement séparable du bâti (10) comprend en outre la batterie (7).

7. Vélo selon la revendication 6 dans lequel la machine électrique (2) peut être repliée contre le sous-ensemble (20).

8. Vélo selon la revendication 7 dans lequel la batterie (7) est en outre manuellement séparable du bâti (10) indépendamment du sous-ensemble (20).

9. Vélo selon l'une des revendications 4 à 8 dans lequel le sous-ensemble (20) est porté par un encadrement s'étendant dans un plan sensiblement horizontal, le sous-ensemble (20) étant séparable horizontalement du bâti (10).

10. Vélo selon la revendication 9 dans lequel le sous-ensemble (20) est séparable transversalement du bâti (10).

11. Vélo selon l'une des revendications 4 à 10 dans lequel le bâti comprend un connecteur électrique rapide (106) pour connecter le sous-ensemble (20) à des interfaces solidaires du vélo.

12. Vélo selon l'une des revendications précédentes dans lequel le bâti (10) constitue en outre un porte-bagages.

13. Vélo selon l'une des revendications précédentes dans lequel les moyens de fixation (4) comprennent un bras oscillant (41) articulé par rapport à une embase (42) portée par le bâti selon un axe (43) sensiblement parallèle à l'axe (21) de la machine électrique (2).

## Patentansprüche

1. Fahrrad, umfassend:
einen Fahrradrahmen (11) und
ein Hinterrad (61), das einen Luftreifen (5) mit einer komplementären Zahnung (51) aufweist, und
eine elektrische Hilfsvorrichtung für ein Fahrrad, wobei die Vorrichtung umfasst:
- eine elektrische Maschine (2), die einen Rotor umfasst,
- Befestigungsmittel (4) der elektrischen Maschine (2),
- eine Batterie (7) zur Versorgung der elektrischen Maschine (2),
- Steuerungsmittel (8) der elektrischen Maschine (2),
- ein Antriebsritzel (3), das vom Rotor der elektrischen Maschine (2) angetrieben wird, und
- ein Gestell (10), wobei
- die Befestigungsmittel (4) von dem Gestell (10) der Vorrichtung getragen werden, das seinerseits am Rahmen (11) des Fahrrads befestigt ist, was die Anbringung der Vorrichtung am Fahrrad ermöglicht, wobei das Gestell Arme (101, 102, 103, 104), die an der Achse des Hinterrades (61) des Fahrrads befestigt sind, und Zugstangen (116), welche die Drehung des Gestells (10) um die Achse des Rades verhindern, aufweist,
wobei das Fahrrad **dadurch gekennzeichnet ist, dass** das Antriebsritzel (3) eine Zahnung (31) aufweist, die tangential im Eingriff mit einer hauptsächlich aus Gummi bestehenden komplementären Zahnung (51) steht, die mit dem Reifen (5) des Hinterrades (61) des Fahrrads fest verbunden ist, und die elektrische Maschine (2) bezüglich der Ebene des Hinterrades (61) um einen Winkel geneigt ist und die komplementäre Zahnung (51) mit einer Seitenwand (52) des Reifens fest verbunden ist und sich radial unter dem Äquator (54) befindet.

2. Fahrrad nach Anspruch 1, wobei die Steuerungsmittel (8) der elektrischen Maschine (2) ebenfalls vom Gestell (10) getragen werden.

3. Fahrrad nach Anspruch 2, wobei die Batterie (7) ebenfalls vom Gestell (10) getragen wird.

4. Fahrrad nach einem der vorhergehenden Ansprüche, wobei die Befestigungsmittel (4) mit der elektrischen Maschine (2) eine manuell vom Gestell (10) trennbare Unterbaugruppe (20) bilden.

5. Fahrrad nach Anspruch 4, wobei die manuell vom Gestell trennbare Unterbaugruppe (20) außerdem die Steuerungsmittel (8) der elektrischen Maschine (2) umfasst.

6. Fahrrad nach Anspruch 5, wobei die manuell vom Gestell (10) trennbare Unterbaugruppe (20) außerdem die Batterie (7) umfasst.

7. Fahrrad nach Anspruch 6, wobei die elektrische Maschine (2) gegen die Unterbaugruppe (20) geklappt werden kann.

8. Fahrrad nach Anspruch 7, wobei die Batterie (7) außerdem unabhängig von der Unterbaugruppe (20) manuell vom Gestell (10) trennbar ist.

9. Fahrrad nach einem der Ansprüche 4 bis 8, wobei die Unterbaugruppe (20) von einer Einrahmung getragen wird, die sich in einer im Wesentlichen horizontalen Ebene erstreckt, wobei die Unterbaugruppe (20) horizontal vom Gestell (10) trennbar ist.

10. Fahrrad nach Anspruch 9, wobei die Unterbaugruppe (20) in Querrichtung vom Gestell (10) trennbar ist.

11. Fahrrad nach einem der Ansprüche 4 bis 10, wobei das Gestell einen elektrischen Schnellverbinder (106) zum Verbinden der Unterbaugruppe (20) mit Schnittstellen, die mit dem Fahrrad fest verbunden sind, umfasst.

12. Fahrrad nach einem der vorhergehenden Ansprüche, wobei das Gestell (10) außerdem einen Gepäckträger darstellt.

13. Fahrrad nach einem der vorhergehenden Ansprüche, wobei die Befestigungsmittel (4) einen Schwingarm (41) umfassen, der an einem von dem Gestell getragenen Sockel (42) entlang einer Achse (43) angelenkt ist, die im Wesentlichen parallel zur Achse (21) der elektrischen Maschine (2) ist.

## Claims

1. Bicycle comprising a frame (11) of the bicycle and a rear wheel (61) having a tyre (5) with a complementary toothing (51) and an electric power-assist device for bicycles, said device comprising:
- an electrical machine (2) comprising a rotor,
- means (4) for fixing the electrical machine (2),
- a battery (7) for powering the electrical machine (2),
- means for controlling (8) the electrical machine (2),
- a drive pinion (3) driven by the rotor of the electrical machine (2), and
- a supporting structure (10), in which
the means (4) for fixing are borne by the supporting structure (10), itself fixed to the frame (11) of the bicycle, which allows the device to be mounted on the bicycle, the supporting structure (10) comprising arms (101, 102, 103, 104) fixed to the axle of the rear wheel (61) and rods (116) that immobilise the rotation of the supporting structure (10) around the axis of the wheel, the bicycle being **characterized in that** the drive pinion (3) comprises a toothing (31) meshing tangentially with the complementary toothing (51) mainly made of rubber integral to the tyre (5) of the rear wheel (61) of the bicycle and the electrical machine (2) is inclined by an angle relative to the plane of the rear wheel (61), and the complementary toothing (51) is integral to a flank (52) of the tyre and is situated radially below the equator line (54).

2. Bicycle according to claim 1, wherein the means for controlling (8) the electrical machine (2) are also borne by the supporting structure (10).

3. Bicycle according to claim 2, wherein the battery (7) is also borne by the supporting structure (10).

4. Bicycle according to any of the preceding claims, wherein the fixing means (4) together with the electrical machine (2) form a sub-assembly (20) which can be separated manually from the supporting structure (10).

5. Bicycle according to claim 4, wherein the sub-assembly (20) which can be separated manually from the supporting structure also comprises the means for controlling (8) the electrical machine (2).

6. Bicycle according to claim 5, wherein the sub-assembly (20) which can be separated manually from the supporting structure (10) also comprises the battery (7).

7. Bicycle according to claim 6, wherein the electrical machine (2) may be folded against the sub-assembly (20).

8. Bicycle according to claim 7, wherein the battery (7) can also be separated manually from the supporting structure (10) independently of the sub-assembly (20).

9. Bicycle according to any of claims 4 to 8, wherein the sub-assembly (20) is carried by a framework extending in a substantially horizontal plane, the sub-assembly (20) being able to be separated horizontally from the supporting structure (10).

10. Bicycle according to claim 9, wherein the sub-assembly (20) can be separated transversely from the supporting structure (10).

11. Bicycle according to any of claims 4 to 10, wherein the supporting structure comprises a rapid electrical connector (106) for connecting the sub-assembly (20) to interfaces integral with the bicycle.

12. Bicycle according to any of the preceding claims, wherein the supporting structure (10) also constitutes a luggage rack.

13. Bicycle according to any of the preceding claims, wherein the fixing means (4) comprise an oscillating arm (41) articulated relative to a mount (42) borne by the supporting structure around an axis (43) substantially parallel to the axis (21) of the electrical machine (2).
